(19) Europäisches Patentamt
European Patent Office
Office européen des brevets

(11) **EP 3 040 444 A1**

(12) **EUROPEAN PATENT APPLICATION**
published in accordance with Art. 153(4) EPC

(43) Date of publication:
06.07.2016 Bulletin 2016/27

(51) Int Cl.:
*C23C 22/00* (2006.01)　　*H01F 1/18* (2006.01)

(21) Application number: **14841047.5**

(86) International application number:
**PCT/JP2014/071586**

(22) Date of filing: **18.08.2014**

(87) International publication number:
**WO 2015/029828 (05.03.2015 Gazette 2015/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.08.2013　JP 2013176956**

(71) Applicants:
• **JFE Steel Corporation**
　**Tokyo 100-0011 (JP)**
• **Dai Nippon Toryo Co., Ltd.**
　**Konohana-ku**
　**Osaka 554-0012 (JP)**

(72) Inventors:
• **NAKAGAWA Nobuko**
　**Tokyo 100-0011 (JP)**
• **TADA Chiyoko**
　**Tokyo 100-0011 (JP)**
• **NAKAMURA Kengo**
　**Otawara-shi**
　**Tochigi 324-8516 (JP)**
• **KIMURA Hiroaki**
　**Komaki-shi**
　**Aichi 485-8516 (JP)**

(74) Representative: **Grünecker Patent- und Rechtsanwälte PartG mbB Leopoldstraße 4 80802 München (DE)**

(54) **ELECTROMAGNETIC STEEL SHEET WITH INSULATING COATING FILM, METHOD FOR PRODUCING SAME, AND COATING AGENT FOR FORMING INSULATING COATING FILM**

(57) The present invention provides: an electromagnetic steel sheet which is suitable as a material for iron cores for electrical devices and the like, especially iron cores for large electric generators and the like, and which has excellent heat resistance, excellent characteristics such as interlayer resistance after retention at high temperatures and small compressibility under a compressive stress at high temperatures, while containing a small amount of a volatile organic solvent; a coating agent for forming an insulating coating film, which is used for the electromagnetic steel sheet and is characterized by containing components (A), (B) and (C) described below and a solvent; and a method for producing the electromagnetic steel sheet. (A) 100 parts by mass, in terms of solid content, of an aqueous carboxyl group-containing resin (B) 100 parts by mass or more but less than 300 parts by mass, in terms of solid content, of an aluminum-containing oxide relative to 100 parts by mass, in terms of solid content, of the component (A) (C) more than 20 parts by mass but less than 100 parts by mass, in terms of solid content, of at least one crosslinking agent that is selected from the group consisting of melamine, isocyanates and oxazoline relative to 100 parts by mass, in terms of solid content, of the component (A).

**Description**

TECHNICAL FIELD

The present invention relates to electrical steel sheets suitable for use as a material for iron cores of electrical machinery and apparatus, large generators in particular, specifically electrical steel sheets provided with insulation coatings, which sheets are excellent in interlaminar insulation resistance after being kept at high temperatures and have low compressibility under compressive stress at high temperatures. The present invention also relates to methods of manufacturing such electrical steel sheets, and coating materials for forming an insulation coating.

BACKGROUND ART

Electrical steel sheets, as being high in efficiency of conversion from electric energy to magnetic energy, are widely used for iron cores of electrical machinery and apparatus including a generator, a transformer, and a motor for household electric appliances. Such an iron core as above is generally formed by stacking multiple electrical steel sheets having been subjected to press forming so as to yield them a desired shape by blanking, and then fastening the stacked electrical steel sheets by caulking, bolting or the like.

While it is important for the improvement in energy conversion efficiency to reduce a laminated core in core loss, a local eddy current generated by a short circuit between the stacked steel sheets may increase core loss. For this reason, the electrical steel sheet to be used as a material for laminated cores generally has an insulation coating formed on its surface. As a result, a laminate of steel sheets is improved in interlaminar insulation resistance, with occurrence of a short circuit between the stacked steel sheets being suppressed, which reduces local eddy currents, and core loss eventually.

Nowadays, an iron core as a laminate of electrical steel sheets finds applications in a diversity of fields, and in recent years, such an iron core is aggressively applied to a large generator, in particular. There, however, are several points of consideration in the application of an iron core with electrical steel sheets stacked together to a large generator or the like.

First of all, an iron core of a large generator or the like must handle high voltages. Accordingly, the electrical steel sheets to be used as a material for the iron core of a large generator or the like should have a larger interlaminar insulation resistance value than that required of electrical steel sheets used as a material for an iron core of a small motor for household electric appliances or the like. To be more specific: Electrical steel sheets constituting an iron core of a large generator should have an interlaminar insulation resistance value exceeding about 300 $\Omega \cdot \text{cm}^2$/sheet as measured in accordance with JIS C 2550 (2000), "9. Interlaminar Insulation Resistance Testing" (Method A). Dielectric breakdown characteristics allowing an iron core to handle high voltages are also necessary.

Secondly, an iron core of a large generator or the like in operation is exposed to a high-temperature environment because of heat caused by a mechanical loss or Joule heat generated at the electric steel sheets. The electrical steel sheets to be used as a material for such an iron core should have a high interlaminar insulation resistance even after being kept in a high-temperature environment.

In order to cope with the above points, various techniques have already been proposed, with examples of such known techniques including a technique for applying a varnish composed of an alkyd resin to an electrical steel sheet provided with an insulation coating to a thickness of more than 5 $\mu$m and drying the applied varnish, and the method of forming an electrical insulation coating as disclosed in Patent Literature 1 in which a resin-based treatment solution prepared by combining a resin varnish with one or both of molybdenum disulfide and tungsten disulfide is applied to an electrical steel sheet, then baked so as to obtain an insulation coating with a thickness of 2 to 15 $\mu$m. The exemplary techniques as above aim at improving the interlaminar insulation resistance by forming a varnish coating of higher insulation quality on top of an insulation coating provided on an electrical steel sheet, and by forming an insulation coating containing a varnish on an electrical steel sheet, respectively, in view of the fact that an adequate interlaminar insulation resistance cannot be ensured by insulation coatings of the electrical steel sheets with insulation coatings to be used for small motors for household electric appliances, and the like.

In this connection, an insulation coating adapted for electrical steel sheets may be an inorganic coating or a semiorganic coating apart from the varnish coating and the insulation coating containing a varnish as described above. Such insulation coatings are excellent in heat resistance and hardness as compared with the varnish coating and the insulation coating containing a varnish as above. Among others, inorganic coatings have much excellent heat resistances and hardnesses. Inorganic coatings, however, are inferior in insulation quality to the varnish coating and the insulation coating containing a varnish and cannot ensure an interlaminar insulation resistance required of a material for the iron core of a large generator or the like. Moreover, inorganic coatings exhibit a lower blanking workability during the blanking of an electrical steel sheet into a desired shape.

Semiorganic coatings are higher in insulation quality than inorganic ones, and Patent Literature 2, for instance, has proposed an electrical steel sheet having a varnishfree, semiorganic coating, namely an insulation coating containing an inorganic compound and an organic resin, formed thereon. The inorganic compound includes an oxide sol composed of at least one selected from among silica sol, alumina sol, titania sol, antimony sol, tungsten sol and molybdenum sol, boric acid, and a silane coupling agent, and is contained at a solid content ratio of more than 30 wt% but less than 90 wt%, while the organic resin includes at least one selected from among acrylic resin, styrene resin, silicone resin, polyester resin, urethane resin, polyethylene resin, polyamide resin, phenol resin and epoxy resin. The insulation coating is made to contain more than 2 parts by mass but less than 40 parts by mass of boric acid and not less than 1 part by mass but less than 15 parts by mass of the silane coupling agent for every 100 parts by mass of the oxide sol in terms of solid content.

CITATION LIST

PATENT LITERATURE

Patent Literature 1: JP 60-70610 A
Patent Literature 2: JP 2009-235530 A

SUMMARY OF INVENTION

TECHNICAL PROBLEMS

The prior art as described above, however, involves the following problems.

Taking account of the fact that an iron core of a large generator may reach a temperature of 170°C or higher during operation, the varnish coating as above and the insulation coating containing a varnish as proposed by Patent Literature 1 are thermally decomposed at such a high temperature. With the coatings as such, an adequate interlaminar insulation resistance cannot be ensured after their being kept at high temperatures and, in addition, the adhesion to an electrical steel sheet will be degraded to cause peeling of the coatings, which is often observed.

Moreover, neither the varnish coating as above nor the insulation coating containing a varnish as proposed by Patent Literature 1 has an adequate hardness. As a result, during assembly of an iron core by manually stacking electrical steel sheets as a core material, scuffing caused in the handling cannot be prevented, that is to say, the interlaminar insulation resistance characteristics are made unstable, which causes unevenness in the characteristics among products.

The alkyd resin to be used as a varnish often contains a volatile organic solvent, so that there arise problems with a working environment in that a large amount of vapor of the organic solvent is generated in the process for forming the varnish coating or the insulation coating containing a varnish on an electrical steel sheet. In addition, under recent circumstances in the industrial world that encourage a voluntary regulation of VOC emission, use of the varnish coating or the insulation coating containing a varnish is improper to the demand for VOC emission reduction.

The semiorganic coating as proposed by Patent Literature 2, which contains an inorganic compound including an oxide sol, boric acid and a silane coupling agent, and contains an organic resin as well, exhibits indeed a more excellent heat resistance than both the varnish coating and the insulation coating containing a varnish, but its heat resistance is not adequate yet for the application to a material for the iron core of a large generator or the like, with deterioration in insulation quality being observed after the coating is kept at high temperatures.

If a desired interlaminar insulation resistance is to be ensured using the technique as proposed by Patent Literature 2, the insulation coating should considerably be increased in coating weight, so that the interlaminar insulation resistance is hard to improve without deterioration of any other property (adhesion property of the insulation coating).

None of the conventional techniques as above considers the compressibility of the insulation coating under compressive stress at high temperatures.

As mentioned earlier, such an iron core as above is generally formed by stacking multiple electrical steel sheets having been subjected to press forming so as to yield them a desired shape by blanking, and then fastening the stacked electrical steel sheets by caulking, bolting or the like. Accordingly, insulation coatings of electric steel sheets constituting an iron core are continuously applied with compressive stress in the direction in which the electrical steel sheets are stacked (in the thickness direction of the insulation coating). Furthermore, with heat caused by a mechanical loss or Joule heat during operation of a large generator, insulation coatings of the electric steel sheets constituting an iron core are heated to a high temperature.

Thus, insulation coatings of the electric steel sheets constituting an iron core are continuously applied with compressive stress at high temperatures during operation of a large generator. The insulation coating is therefore easily compressed and decreased in thickness during operation of a large generator. When decreased in thickness, the insulation coating deteriorate in characteristics, particularly in insulation quality. From the viewpoint of insulation quality or the like, it is preferable for an insulation coating to have low compressibility under compressive stress at high temperatures. Aside from that, an insulation coating having high compressibility under compressive stress at high temperatures makes it difficult to estimate the characteristics of the coating in use (that is, during operation of a generator). Also from the viewpoint of designing an iron core, it is preferable for an insulation coating to have low compressibility under compressive stress at high temperatures.

The prior art, however, does not consider the compressibility of an insulation coating under compressive stress at high temperatures and therefore has problems in that, for instance, the characteristics of the insulation coating in use (that is, during operation of a generator) drastically deteriorate or are unstable.

An object of the present invention is to solve the above problems with the prior art in an advantageous manner and to provide an electrical steel sheet having an insulation coating provided thereon, which sheet is suitable for use as a material for iron cores of electrical machinery and apparatus, large generators in particular, with the insulation coating having much excellent heat resistance, i.e., an adequate interlaminar insulation resistance even after being kept at high temperatures, low compressibility under compressive stress at high temperatures, and a low volatile organic solvent content, as well as a manufacturing method for such an electrical steel sheet. Another object of the present invention is to provide a coating material for forming an insulation coating, which material is suitable for the manufacture of the electrical steel sheet with an insulation coating as above, and has a low VOC emission.

SOLUTION TO PROBLEMS

In order to achieve the above objects, the present inventors initially focused on semiorganic coatings higher in insulation quality than inorganic coatings, and came up with the idea of selecting an aqueous resin as an organic component contained in a semiorganic coating. In consequence of the above, the volatile organic solvent content of a coating material is reduced as much as possible. Then, they diligently discussed various factors influencing the properties of an electrical steel sheet, the interlaminar insulation resistance after the steel sheet is kept at high temperatures in particular, if a semiorganic coating containing an aqueous resin is formed on the steel sheet as an insulation coating.

As a result, the inventors found that an insulation coating allowing an excellent interlaminar insulation resistance (insulation quality) even after being kept at high temperatures is obtained if a semiorganic coating contains an inorganic component including an Al-containing oxide, and an organic component including an aqueous carboxy group-containing resin.

In such a semiorganic coating as above, a reactant having a firmly crosslinked structure is formed by the ester linkage of hydroxy groups coordinated on the surface of the Al-containing oxide with part of the carboxy groups of the aqueous carboxy group-containing resin. The reactant having a firmly crosslinked structure is extremely high in heat resistance, so that the thermal decomposition of the coating in a high-temperature environment is suppressed with effect. The inventors thus found that an electrical steel sheet exhibiting a much excellent interlaminar insulation resistance even after being kept at high temperatures is obtained by forming a coating containing an Al-containing oxide and an aqueous carboxy group-containing resin on the surface of the electrical steel sheet.

The present inventors further found that it is very effective for the formation of the above insulation coating which is excellent in heat resistance and so forth to use a coating material containing at least one corsslinking agent selected from among melamine, isocyanate and oxazoline, apart from an Al-containing oxide and an aqueous carboxy group-containing resin.

Secondly, the present inventors discussed a method for lowering the compressibility of a semiorganic coating containing an aqueous carboxy group-containing resin and an Al-containing oxide as above under compressive stress at high temperatures. As a result, the inventors found that it is effective to adjust the content of an Al-containing oxide, which is a hard inorganic component, to improve hardness of an insulation coating. The inventors also found that if containing, in addition to an Al-containing oxide, a Ti-containing oxide as an inorganic component of a semiorganic coating, an insulation coating is further improved in hardness, which leads to a much lower compressibility under compressive stress at high temperatures.

The present invention has been made on the basis of the findings as above, with the gist thereof being as follows.

[1] A coating material for forming an insulation coating, containing apart from a solvent:

an aqueous carboxy group-containing resin as component (A) in an amount of 100 parts by mass in terms of solid content;
an aluminum-containing oxide as component (B) in an amount of not less than 100 parts by mass but less than 300 parts by mass in terms of solid content, based on the component (A) present in an amount of 100 parts by mass in terms of solid content; and
at least one crosslinking agent as component (C) selected from the group consisting of melamine, isocyanate and oxazoline, in an amount of more than 20 parts by mass but less than 100 parts by mass in terms of solid content, based on the component (A) present in an amount of 100 parts by mass in terms of solid content.

[2] The coating material for forming an insulation coating according to [1], further containing:

a titanium-containing oxide as component (D) in an amount of more than 10 parts by mass but less than 300 parts by mass in terms of solid content, based on the component (A) present in an amount of 100 parts by mass in terms of solid content.

[3] The coating material for forming an insulation coating according to [1] or [2], wherein the aqueous carboxy group-containing resin as component (A) has an acid value of 15 to 45 mgKOH/g.
[4] A manufacturing method for an electrical steel sheet with an insulation coating, comprising forming an insulation coating on one or both of sides of an electrical steel sheet by applying thereto a coating material containing apart from a solvent:

an aqueous carboxy group-containing resin as component (A) in an amount of 100 parts by mass in terms of solid content;
an aluminum-containing oxide as component (B) in an amount of not less than 100 parts by mass but less than 300 parts by mass in terms of solid content, based on the component (A) present in an amount of 100 parts by mass in terms of solid content; and
at least one crosslinking agent as component (C) selected from the group consisting of melamine, isocyanate and oxazoline, in an amount of more than 20 parts by mass but less than 100 parts by mass in terms of solid content, based on the component (A) present in an amount of 100 parts by mass in terms of solid content.

[5] The manufacturing method for an electrical steel sheet with an insulation coating according to [4], wherein the coating material further contains:

a titanium-containing oxide as component (D) in an amount of more than 10 parts by mass but less than 300 parts by mass in terms of solid content, based on the component (A) present in an amount of 100 parts by mass in terms of solid content.

[6] The manufacturing method for an electrical steel sheet with an insulation coating according to [4] or [5], wherein the aqueous carboxy group-containing resin as component (A) has an acid value of 15 to 45 mgKOH/g.
[7] The manufacturing method for an electrical steel sheet with an insulation coating according to any one of [4] to [6], wherein the insulation coating has a coating weight per sheet side of not less than 0.9 g/m$^2$ but not more than 20 g/m$^2$.
[8] An electrical steel sheet with an insulation coating, having an insulation coating formed by the manufacturing method according to any one of [4] to [7].

ADVANTAGEOUS EFFECTS OF INVENTION

The present invention makes it possible to provide an electrical steel sheet provided with the insulation coating which has heat resistance, and low compressibility under compressive stress at high temperatures, and involves reduced generation of a volatile organic solvent, with the steel sheet being suitable as a material for iron cores of electrical machinery and apparatus, large generators in particular, as well as a manufacturing method for such an electrical steel sheet, that is to say, the invention industrially achieves special effects.

DESCRIPTION OF EMBODIMENTS

In the following, the present invention is described in detail.
The coating material to be used in the invention for forming an insulation coating is initially described.
The inventive coating material to be used in the invention for forming an insulation coating contains: (A) a main resin; (B) an inorganic component; and (C) a crosslinking agent. The coating material to be used for forming an insulation coating in the invention is characterized in that it contains: a solvent; (A) an aqueous carboxy group-containing resin; (B) an Al-containing oxide in an amount of not less than 100 parts by mass but less than 300 parts by mass in terms of solid content; and (C) at least one crosslinking agent selected from among melamine, isocyanate and oxazoline in an amount of more than 20 parts by mass but less than 100 parts by mass in terms of solid content, with the amounts of (B) and (C) being specified based on 100 parts by mass of the resin (A) in terms of solid content. The coating material may further contain: (D) a Ti-containing oxide as an inorganic component apart from (B) as above in an amount of more than 10 parts by mass but less than 300 parts by mass in terms of solid content, based on 100 parts by mass of the resin (A) in terms of solid content. The aqueous carboxy group-containing resin (A) preferably has an acid value of 15 to 45 mgKOH/g.

(A) Aqueous Carboxy Group-Containing Resin

The coating material of the invention contains an aqueous resin as an organic component. Use of an aqueous resin makes it possible to minimize the generation of a volatile organic solvent during the formation of an insulation coating. The organic component which is an aqueous carboxy group-containing resin reacts, owing to carboxy groups of the resin, with an Al-containing oxide described later to form a reactant having a firmly crosslinked structure.

The aqueous carboxy group-containing resin as above is not particularly limited in type. In other words, any aqueous resin containing carboxy groups is usable, and aqueous resins suitably used as the aqueous carboxy group-containing resin of the invention include a reaction product obtained by polymerizing a modified epoxy resin resulting from the reaction between an epoxy resin (a1) and an amine (a2) with a vinyl monomer component including a carboxy group-containing vinyl monomer (a3).

A modified epoxy resin obtained by modifying the epoxy resin (a1) with the amine (a2) is an aqueous resin as a result of the ring-opening addition reaction between part of epoxy groups of the epoxy resin (a1) and amino groups of the amine (a2). When the epoxy resin (a1) is modified with the amine (a2) into a modified epoxy resin of aqueous nature, it is preferable that the epoxy resin (a1) and the amine (a2) be blended at such a ratio that the amine (a2) is used in an amount of 3 to 30 parts by mass for every 100 parts by mass of the epoxy resin (a1). If the amount of the amine (a2) is not less than 3 parts by mass, polar groups will suffice, so that the coating is not reduced in adhesion property or moisture resistance. If the amount of the amine (a2) is not more than 30 parts by mass, the coating is not reduced in water resistance or solvent resistance.

The epoxy resin (a1) is not particularly limited as long as it is an epoxy resin having an aromatic ring in the molecule. Various known epoxy resins are usable, with specific examples including a bisphenol-type epoxy resin and a novolac-type epoxy resin.

The bisphenol-type epoxy resin is exemplified by a reaction product of a bisphenol with a haloepoxide such as epichlorohydrin or β-methyl epichlorohydrin. Examples of the above bisphenol include: a reaction product of phenol or 2,6-dihalophenol with an aldehyde, or ketone, such as formaldehyde, acetaldehyde, acetone, acetophenone, cyclohexane, and benzophenone; a peroxide of dihydroxyphenyl sulfide; and a product of etherification reaction between hydroquinones.

The novolac-type epoxy resin is exemplified by a product resulting from the reaction of a novolac-type phenol resin synthesized from phenol, cresol or the like with epichlorohydrin.

Glycidyl ethers of polyhydric alcohols, for instance, are also usable as the epoxy resin (a1). Exemplary polyhydric alcohols include 1,4-butanediol, 1,6-hexanediol, trimethylolpropane, cyclohexane dimethanol, a hydrogenated bisphenol (type A, type F), and a polyalkylene glycol having an alkylene glycol structure. The polyalkylene glycol to be used may be any of known polyalkylene glycols including polyethylene glycol, polypropylene glycol, and polybutylene glycol.

The epoxy resin (a1) may also be other known epoxy resin than the glycidyl ethers of polyhydric alcohols as above, namely, polybutadiene diglycidyl ether, for instance. It is also possible to use any of various known epoxidized oils and/or dimeric acid ester with glycidyl in order to impart flexibility to the coating.

Out of the epoxy resins as described above, any one alone or any two or more in combination may appropriately be used as the epoxy resin (a1). From the viewpoint of the adhesion to an electrical steel sheet, use of a bisphenol-type epoxy resin is preferred. The epoxy equivalent of the epoxy resin (a1) depends on the molecular weight of a reaction product finally obtained (aqueous carboxy group-containing resin), while an epoxy equivalent of 100 to 3000 is preferred taking account of the handleability during the production of the reaction product (aqueous carboxy group-containing resin), prevention of gelation, and so forth. If the epoxy resin (a1) has an epoxy equivalent of not less than 100, the crosslinking reaction with a crosslinking agent does not proceed at an excessively high rate, so that the handleability is not degraded. On the other hand, an epoxy equivalent of not more than 3000 neither degrades the handleability during the synthesis (production) of the reaction product (aqueous carboxy group-containing resin) nor causes gelation to be more liable to occur.

The amine (a2) may be any of various known amines. Examples of usable amines include an alkanolamine, an aliphatic amine, an aromatic amine, an alicyclic amine, and an aromatic nuclear-substituted aliphatic amine, from among which at least one may be selected appropriately for use.

The alkanolamine is exemplified by ethanolamine, diethanolamine, diisopropanolamine, di-2-hydroxybutylamine, N-methylethanolamine, N-ethylethanolamine, and N-benzylethanolamine. The aliphatic amine is exemplified by secondary amines such as ethylamine, propylamine, butylamine, hexylamine, octylamine, laurylamine, stearylamine, palmitylamine, oleylamine, and erucylamine.

The aromatic amine is exemplified by toluidines, xylidines, cumidines (isopropylanilines), hexylanilines, nonylanilines, and dodecylanilines. The alicyclic amine is exemplified by cyclopentylamines, cyclohexylamines, and norbornylamines. The aromatic nuclear-substituted aliphatic amine is exemplified by benzylamines and phenethylamines.

The aqueous, modified epoxy resin is polymerized with the vinyl monomer component including the carboxy group-containing vinyl monomer (a3), so as to obtain the aqueous carboxy group-containing resin. To be more specific: Out of the epoxy groups of the aqueous, modified epoxy resin, those which have not reacted with amino groups react with part of the carboxy groups of the vinyl monomer component to yield the aqueous carboxy group-containing resin. During the polymerization as above, a known azo compound may be used as a polymerization initiator.

The carboxy group-containing vinyl monomer (a3) is not particularly limited as long as it is a monomer containing a carboxy group as a functional group, and a polymerizable vinyl group as well, so that any such known monomer is usable. Specific examples of usable monomers include such carboxy group-containing vinyl monomers as (meth)acrylic acid, maleic acid, maleic anhydride, fumaric acid, and itaconic acid. For the improvement in stability upon synthesis and storage stability, a styrene monomer may be used apart from the above (meth)acrylic acid or the like.

When the aqueous, modified epoxy resin as described above is polymerized with the vinyl monomer component including the carboxy group-containing vinyl monomer (a3), so as to obtain the aqueous carboxy group-containing resin, it is preferable that the aqueous, modified epoxy resin and the vinyl monomer (a3) be blended at such a ratio that the vinyl monomer (a3) is used in an amount of 5 to 100 parts by mass for every 100 parts by mass of the aqueous, modified epoxy resin. The coating is not reduced in moisture resistance if the amount of the vinyl monomer (a3) is 5 parts by mass or higher, while not reduced in water resistance or solvent resistance if the amount of the vinyl monomer (a3) is 100 parts by mass or lower. An amount of 80 parts by mass or lower is more preferable.

The equivalent ratio of [carboxy group]/[epoxy group] is not particularly limited and is preferably not less than 0.1 but less than 3.0. If the equivalent ratio is not less than 0.1, a network structure is formed owing to the ester linkage to be described later, resulting in excellent heat resistance, and if the equivalent ratio is less than 3.0, water is hardly attracted, resulting in excellent water resistance. More preferably, the equivalent ratio of [carboxy group]/[epoxy group] is not less than 0.3 but less than 2.6.

In the coating material of the invention, the solid acid value of the aqueous carboxy group-containing resin (A) is preferably 15 to 45 mgKOH/g.

As described later, the most distinctive feature of the present invention is that a reactant having a firm network structure (firmly crosslinked structure) is formed between the aqueous carboxy group-containing resin (A) as an organic component and the Al-containing oxide (B) as an inorganic component by the ester linkage between the carboxy groups of the resin (A) and hydroxy groups coordinated on the surface of alumina or alumina-coated silica, namely, the oxide (B). It is thus preferable that the aqueous carboxy group-containing resin to be contained in the coating material of the invention have a desired carboxy group contributing to the reaction with the Al-containing oxide.

If the solid acid value of the aqueous carboxy group-containing resin is not less than 15 mgKOH/g, the carboxy groups as contained in the aqueous carboxy group-containing resin will suffice, so that the reaction (ester linkage) with the Al-containing oxide occurs adequately, with effects owing to the firm network structure (firmly crosslinked structure) as above being fully achieved. If the solid acid value of the aqueous carboxy group-containing resin is not more than 45 mgKOH/g, the aqueous carboxy group-containing resin will not contain carboxy groups to excess and, accordingly, not be degraded in stability. For this reason, it is preferable to make the solid acid value of the aqueous carboxy group-containing resin fall within the range of 15 to 45 mgKOH/g. More preferably, the value falls within the range of 20 to 40 mgKOH/g.

During the preparation of the aqueous carboxy group-containing resin (A), the solvent to be used is water from the viewpoint that a vinyl-modified epoxy resin finally obtained (namely, aqueous carboxy group-containing resin) will have been made aqueous. If water is to be replaced, it is desirable to use a hydrophilic solvent in a small amount. Specific examples of usable hydrophilic solvents include: glycol ethers such as propylene glycol monomethyl ether, propylene glycol monoethyl ether, propylene glycol mono-n-butyl ether, propylene glycol mono-t-butyl ether, dipropylene glycol monomethyl ether, methyl cellosolve, ethyl cellosolve, n-butyl cellosolve, and t-butyl cellosolve; and alcohols such as isopropyl alcohol and butyl alcohol. Out of the hydrophilic solvents as above, at least one may be selected appropriately for use. The amount of hydrophilic solvent or solvents used is preferably 5 to 20% by mass of the entire coating material. An amount falling within this range will cause no problems with the storage stability.

The neutralizer to be used during the preparation of the aqueous carboxy group-containing resin (A) may be any of various known amines. Examples of usable amines include an allkanolamine, an aliphatic amine, an aromatic amine, an alicyclic amine, and an aromatic nuclear-substituted aliphatic amine, from among which at least one may be selected appropriately for use. Among others, alkanolamines such as monoethanolamine, diethanolamine, monoisopropanolamine, diisopropanolamine, N-methylethanolamine, and N-ethylethanolamine allow a good stability of the resin as made aqueous, that is to say, are suitable for use. The pH of the solution is preferably adjusted to 6 to 9 by the addition of a neutralizer.

(B) Al-Containing Oxide

The coating material of the invention contains an Al-containing oxide as an inorganic component. The Al-containing oxide forms a reactant having a firmly crosslinked structure along with the aqueous carboxy group-containing resin (A) as described above and is, accordingly, a component very important for the improvement in heat resistance of an insulation coating formed. In general, Al-containing oxides are of low costs and have high insulation qualities effective at improving an insulation coating formed in insulation quality. In addition, the Al-containing oxides are effective at hardening an insulation coating formed to lower the compressibility of the insulation coating under compressive stress at high temperatures. The Al-containing oxide to be used is not particularly limited in type, that is to say, any of known Al-containing oxides varied in type is usable, with examples including alumina (alumina sol), alumina-coated silica, and kaolinite. Such usable Al-containing oxides may not only be used alone but in combination of appropriate two or more out of them.

The coating material of the invention contains not less than 100 parts by mass but less than 300 parts by mass of the Al-containing oxide (B) in terms of solid content, based on 100 parts by mass of the aqueous carboxy group-containing resin (A) in terms of solid content. If the amount of the Al-containing oxide is less than 100 parts by mass in terms of solid content, based on 100 parts by mass of the aqueous carboxy group-containing resin in terms of solid content, an insulation coating formed will not sufficiently be reduced in compressibility under compressive stress at high temperatures, so that the characteristics of the insulation coating such as insulation quality deteriorate. Therefore, the Al-containing oxide is contained in the coating material of the invention in an amount of not less than 100 parts by mass in terms of solid content, based on 100 parts by mass of the aqueous carboxy group-containing resin in terms of solid content. An amount of not less than 120 parts by mass is preferred, with an amount of not less than 150 parts by mass being more preferred. On the other hand, if the amount of the Al-containing oxide is not less than 300 parts by mass in terms of solid content, based on 100 parts by mass of the aqueous carboxy group-containing resin in terms of solid content, the Al-containing oxide in the coating material will easily aggregate, and thus the coating material has the form improper for the coating. Therefore, the Al-containing oxide is contained in the coating material of the invention in an amount of less than 300 parts by mass in terms of solid content, based on 100 parts by mass of the aqueous carboxy group-containing resin in terms of solid content. An amount of not more than 250 parts by mass is preferred.

The Al-containing oxide (B) is exemplified by alumina (alumina sol), alumina-coated silica, and kaolinite.

Alumina (alumina sol) is preferably 5 to 100 nm in mean particle size if it is particulate, while 50 to 200 nm in length if it is not particulate but fibrous, taking the mixture quality of the coating material and the appearance of the formed coating into consideration. Alumina (alumina sol) with sizes not falling within these ranges may be hard to mix uniformly in the coating material and, as a consequence, may adversely affect the appearance of an insulation coating formed of the coating material. In addition, alumina (alumina sol) needs to be used keeping its pH in mind because the sol is reduced in dispersion stability at pH values of more than 8.

Alumina-coated silica is a mixture of alumina and silica, and it is preferable from the viewpoint of heat resistance or stability that alumina be localized on the surface of silica. The particle size of alumina-coated silica is preferably specified to be 1 to 30 $\mu$m from the viewpoint of stability or appearance properties. The alumina content is preferably not less than 10% by mass from the viewpoint of heat resistance.

Kaolinite (kaolin) is the clay mineral which is composed of a hydrous silicate of aluminum and which has such a composition that alumina and silica are contained therein, so that it is usable as the Al-containing oxide of the invention. The particle size of kaolinite is preferably specified to be 1 to 30 $\mu$m from the viewpoint of stability or appearance properties.

While it is the most distinctive feature of the coating material of the invention that it contains the Al-containing oxide (B) as an inorganic component, any additional inorganic component may be contained as long as it does not impair the effects of the invention. An inorganic component used in the invention may contain Hf, $HfO_2$, $Fe_2O_3$, and the like as impurities. Such impurities are acceptable if the amount thereof is not more than 10 parts by mass, based on 100 parts by mass of the aqueous carboxy group-containing resin (A) in terms of solid content.

When an insulation coating is formed using the coating material containing the aqueous carboxy group-containing resin (A) and the Al-containing oxide (B) as described above, the carboxy groups of the aqueous carboxy group-containing resin (A) undergo the ester linkage with hydroxy groups coordinated on the surface of the Al-containing oxide (B) that is caused by the heating at a temperature of 120°C or higher, so as to form a reactant having a firm network structure (firmly crosslinded structure) between the aqueous carboxy group-containing resin (A) as an organic component and the Al-containing oxide (B) as an inorganic component.

To be more specific: In the case where the epoxy resin (a1) is modified with the amine (a2) into a modified epoxy resin of aqueous nature, and the aqueous, modified epoxy resin thus obtained is polymerized with the vinyl monomer component including the carboxy group-containing vinyl monomer (a3), so as to obtain the aqueous carboxy group-containing resin, those out of the carboxy groups of the vinyl monomer component which have not reacted with epoxy groups undergo ester linkage (half esterification) with the hydroxy groups as coordinated on the surface of the Al-containing oxide, to thereby form a reactant having a network structure (crosslinked structure).

The reactant having a firm network structure (firmly crosslinked structure) thus formed dramatically improves an insulation coating in heat resistance, that is to say, yields the insulation coating which allows excellent interlaminar insulation resistance and other properties even after being kept at high temperatures.

The reactant having a firm network structure (firmly crosslinked structure) also improves an insulation coating in waterproofing properties (barrier properties), so that the insulation coating has excellent interlaminar insulation resistance and other properties even after being kept in a wet environment.

In addition, the coating material of the invention contains a specified amount of the Al-containing oxide (B) as an inorganic component, so that a hard insulation coating that is not easily compressed under compressive stress at high temperatures can be obtained. Use of an electrical steel sheet provided with such a hard insulation coating as a material for an iron core of a large generator or the like makes it possible to suppress the amount of compression of the insulation coating during operation of the generator, and thus the coating can maintain its desired properties (e.g., insulation quality).

Conventionally, silica finds wide application as an inorganic component of a coating material for forming insulation coatings. If, however, silica is used alone as an inorganic component, with no Al-containing oxides being combined therewith, desired waterproofing properties (barrier properties) are not obtained, and various properties including the interlaminar insulation resistance cannot adequately be ensured after the formed insulation coating is kept in a wet environment.

(C) At Least One Crosslinking Agent Selected from among Melamine, Isocyanate and Oxazoline

A crosslinking agent is added to the coating material in order to crosslink the aqueous carboxy group-containing resin (A) and thereby improve an insulation coating formed in adhesion to an electrical steel sheet. To the coating material of the invention, at least one crosslinking agent selected from among melamine, isocyanate and oxazoline is applied. Since melamine, isocyanate and oxazoline are each of thermosetting nature, application of such a crosslinking agent makes it possible to impart a desired heat resistance to an insulation coating.

The coating material of the invention contains at least one crosslinking agent (C), which is selected from among melamine, isocyanate and oxazoline, in an amount of more than 20 parts by mass but less than 100 parts by mass in terms of solid content, based on 100 parts by mass of the aqueous carboxy group-containing resin (A) in terms of solid content. If the amount of the crosslinking agent is not more than 20 parts by mass in terms of solid content, based on 100 parts by mass of the aqueous carboxy group-containing resin in terms of solid content, an insulation coating formed will have an inadequate adhesion property (adhesion to an electrical steel sheet). Moreover, an insulation coating formed will be reduced in formability and scuff resistance.

If the amount of the crosslinking agent is not less than 100 parts by mass in terms of solid content, based on 100 parts by mass of the aqueous carboxy group-containing resin in terms of solid content, the crosslinking agent may remain behind in an insulation coating formed. Such high amounts are undesirable because the crosslinking agent remaining in an insulation coating deteriorates the boiling water resistance (resistance to the exposure to boiling steam) of the coating, with rusting becoming more liable to occur. In addition, the coating is reduced in formability and adhesion property as a result of the increase in crosslink density. For this reason, the crosslinking agent as above is to be contained in an amount of more than 20 parts by mass but less than 100 parts by mass in terms of solid content, based on 100 parts by mass of the aqueous carboxy group-containing resin in terms of solid content. An amount of 30 to 80 parts by mass is preferred, with an amount of 40 to 70 parts by mass being more preferred.

It should be noted that, if used as a crosslinking agent, an isocyanate is preferably mixed into the coating material immediately before use because of its reactivity in an aqueous coating material.

As described above, the coating material of the invention contains: the aqueous carboxy group-containing resin (A) in an amount of 100 parts by mass in terms of solid content; the Al-containing oxide (B) in an amount of not less than 100 parts by mass but less than 300 parts by mass in terms of solid content, based on 100 parts by mass of the resin (A) in terms of solid content; and at least one crosslinking agent (C) selected from among melamine, isocyanate and oxazoline in an amount of more than 20 parts by mass but less than 100 parts by mass in terms of solid content, based on 100 parts by mass of the resin (A) in terms of solid content. The inventive coating material as such makes it possible to form an insulation coating not only produced with a reduced VOC emission but being excellent in heat resistance, allowing a desired interlaminar insulation resistance even after being kept at high temperatures, and having a good adhesion to an electrical steel sheet and a high corrosion resistance. The coating material of the invention also makes it possible to form an insulation coating much excellent in heat resistance and, moreover, form an insulation coating at a specified coating weight with ease using a conventional application apparatus such as a coater. In addition, the coating material of the invention makes it possible to obtain an insulation coating that is hardly compressed under compressive stress at high temperatures and is excellent in various properties such as insulation quality.

For the purpose of further lowering the compressibility of an insulation coating under compressive stress at high temperatures, the coating material of the invention may be caused to further contain the Ti-containing oxide (D) in an amount of more than 10 parts by mass but less than 300 parts by mass in terms of solid content, based on 100 parts by mass of the resin (A) in terms of solid content.

(D) Ti-Containing Oxide

Similarly to the Al-containing oxide (B), the Ti-containing oxide (D) serves to improve hardness of an insulation coating. Therefore, the coating material containing the Ti-containing oxide (D) is effective at further lowering the compressibility of an insulation coating under compressive stress at high temperatures. The coating material containing the Ti-containing oxide (D) is effective also from the viewpoint of ensuring scuff resistance of an insulation coating. A hard insulation coating can be formed by adding a Ti-containing oxide to the coating material. Consequently, the inventive coating material as made to contain not only an Al-containing oxide but a Ti-containing oxide solves the problem which lies in a conventional assembly of an iron core by manually stacking electrical steel sheets, namely, the problem of reduction in interlaminar insulation resistance of the electrical steel sheets due to the scuffing of an insulation coating by manual handling.

The Ti-containing oxide to be used is not particularly limited in type but may be any of various known Ti-containing oxides, with suitable oxides for use being exemplified by titania (rutile-type). In the case where the coating material contains the Ti-containing oxide (D), it is preferable in view of the hardening of an insulation coating to select melamine as the crosslinking agent.

If contained in the coating material of the invention, the Ti-containing oxide (D) is present in the material in an amount of more than 10 parts by mass but less than 300 parts by mass in terms of solid content, based on 100 parts by mass of the aqueous carboxy group-containing resin (A) in terms of solid content. The appearance of the coated steel sheet will get rid of yellowing, that is to say, be in a uniform, white-like color with the amount of the Ti-containing oxide being more than 10 parts by mass in terms of solid content, based on 100 parts by mass of the aqueous carboxy group-containing resin in terms of solid content. On the other hand, the Ti-containing oxide will be prevented from aggregating, so that the coating material can retain the formation of a chemical solution suitable for coating, with the amount of the Ti-containing oxide being less than 300 parts by mass in terms of solid content, based on 100 parts by mass of the aqueous carboxy group-containing resin in terms of solid content. It is thus favorable that the Ti-containing oxide is contained in the coating material of the invention in an amount of more than 10 parts by mass but less than 300 parts by mass in terms of solid content, based on 100 parts by mass of the aqueous carboxy group-containing resin in terms of solid content. An amount of 50 to 250 parts by mass is more preferable. If having a relatively low content of Ti-containing oxide or including no Ti-containing oxide, the coating material of the invention preferably has a relatively high content of Al-containing oxide from the viewpoint of lowering the compressibility of an insulation coating under compressive stress at high temperatures. For instance, if the Ti-containing oxide content is not more than 150 parts by mass or 0 part by mass in terms of solid content, based on 100 parts by mass of the aqueous carboxy group-containing resin in terms of solid content, it is preferable to have an Al-containing oxide content of not less than 150 parts by mass in terms of solid content, based on 100 parts by mass of the aqueous carboxy group-containing resin in terms of solid content.

The above-mentioned titania is preferably dispersed at a mean particle size of 5 to 50 $\mu$m. A mean particle size of not less than 5 $\mu$m yields a moderate specific surface area, so that the stability is not reduced. A mean particle size of not more than 50 $\mu$m causes no coating defects.

To the coating material of the invention, it is only essential that the above components (A), (B), (C), and optionally (D) are contained therein at a desired blending ratio, and the inventive coating material may contain any additional component as long as it does not impair the effects of the invention. Examples of usable additional components include those to be added in order to further improve a coating in performance or uniformity, such as a surfactant, a rust-preventive agent, a lubricant, and an antioxidant. Known color pigments and extender pigments are also usable as long as they do not deteriorate the coating performance. It is preferable from the viewpoint of keeping the coating performance adequate that additional components are blended into the coating material such that they comprise not more than 10% by mass of a coating on a dry weight basis.

The coating material of the invention is preferably prepared as follows: To part of an aqueous carboxy group-containing resin provided, an Al-containing oxide, optionally along with a Ti-containing oxide, as well as water, a hydrophilic solvent, and a defoaming agent are added, and the resultant mixture is placed in a disperser to obtain a uniform dispersion. Using a dispersion medium, a specified particle size (of not more than 30 $\mu$m, preferably not more than 20 $\mu$m as determined with a fineness gage) is imparted to the Al-containing oxide, and optionally to the Ti-containing oxide as well. If the dispersion process takes time, it is possible to add the dispersion medium in advance. The rest of the aqueous carboxy group-containing resin and a crosslinking agent are then added and dispersed to complete the dispersion. To the dispersion thus obtained, a leveling agent, a neutralizer, and water are further added for the improvement in film forming characteristics, so as to obtain the coating material. The coating material preferably has a solid content of 40 to 55% by mass. A solid content falling within this range allows a high storage stability and excellent coating work properties.

Next described is the manufacturing method for an electrical steel sheet with an insulation coating according to the present invention.

The inventive manufacturing method for an electrical steel sheet with an insulation coating is characterized by the forming an insulation coating on one side or both sides of an electrical steel sheet by applying thereto the coating material as described above.

The electrical steel sheet to be used in the invention as a substrate may be a so-called soft iron sheet (electrical iron sheet) with a high magnetic flux density, a cold-rolled general steel sheet such as SPCC as defined in JIS G 3141 (2009), or a non-oriented electrical steel sheet having Si or Al added thereto for the improvement in specific resistance. The pretreatment to be conducted on the electrical steel sheet is not particularly limited and may also be omitted indeed, but degreasing with an alkali, and pickling with hydrochloric acid, sulfuric acid, phosphoric acid or the like are preferably conducted.

During the formation of an insulation coating on an electrical steel sheet using the coating material as described above, the conventional method, in which a coating material is applied onto the electrical steel sheet surface and then subjected to baking, may be employed, for instance. The coating material as above may be applied onto the electrical steel sheet surface by an application method in industrially common use, namely, a method using any of various instruments, such as a roll coater, a flow coater, a spray coater, a knife coater and a bar coater, to apply a coating material onto an electrical steel sheet. Baking of the coating material as applied onto an electrical steel sheet is not particularly limited in method, either, so that any of conventional baking methods using hot air, infrared heating, induction heating, and the like is usable. In this regard, the baking temperature may be specified within a conventional range of, for instance, 150 to 350°C as the maximum end-point temperature for steel sheet. In order to avoid the discoloration of a coating due to the thermal decomposition of an organic component (aqueous carboxy group-containing resin) contained in the coating material, it is preferable to specify the maximum end-point temperature for steel sheet to be not more than 350°C, more preferably to be 150 to 350°C. The present inventors found that a coating has an improved scratch resistance if the maximum end-point temperature for steel sheet is not less than 300°C. A temperature of 300 to 350°C is even more preferred. The baking time (time to reach the maximum end-point temperature for steel sheet as above) is preferably about 10 to 60 seconds.

An insulation coating made of the coating material as described above may be formed on one side or both sides of an electrical steel sheet. It may be determined as appropriate to various properties required of the electrical steel sheet or an intended use thereof whether an insulation coating is formed on one side or both sides of the electrical steel sheet. It is also possible to form an insulation coating of the above coating material on one side of an electrical steel sheet and that of another coating material on the other side.

With respect to the coating weight of an insulation coating, it is preferable in order to impart desired properties to an electrical steel sheet that the coating weight per sheet side is 0.9 to 20 g/m$^2$ in terms of total solid mass. A coating weight per sheet side of not less than 0.9 g/m$^2$ makes it possible to ensure a desired insulation quality (interlaminar insulation resistance). Moreover, if an insulation coating with a coating weight per sheet side of not less than 0.9 g/m$^2$ is to be formed, it is readily possible to uniformly apply the coating material onto the electrical steel sheet surface, which allows the electrical steel sheet with the insulation coating as formed thereon to have stable blanking workability and corrosion resistance. On the other hand, a coating weight per sheet side of not more than 20 g/m$^2$ makes it possible to prevent the reduction of the insulation coating in adhesion to an electrical steel sheet or the blistering during baking performed after the coating material is applied onto the electrical steel sheet surface, so that the coating quality is kept favorable. It is thus preferable that the coating weight of an insulation coating is 0.9 to 20 g/m$^2$ per sheet side. A coating weight per sheet side of 1.5 to 15 g/m$^2$ is more preferred.

The weight of an insulation coating in terms of total solid mass may be measured by subjecting an electrical steel sheet with an insulation coating to treatment with a hot alkali or the like so as to dissolve the insulation coating alone, and determining the change from the weight before the dissolution of the insulation coating to that after the dissolution (weight-based method). In the case where the coating weight of an insulation coating is low, the weight of the insulation coating may be determined from a calibration curve between the counting by fluorescent X-ray analysis of a specified element constituting the insulation coating and the weight-based method (alkali peeling method) as above.

The electrical steel sheet with an insulation coating that is provided with a specified insulation coating formed according to the inventive manufacturing method for an electrical steel sheet with an insulation coating exhibits a most excellent interlaminar insulation resistance even after being kept at high temperatures because it is provided with an insulation coating having an aqueous carboxy group-containing resin and an Al-containing oxide each contained in the coating in a desired amount. In other words, a firm network structure (firmly crosslinked structure) is formed between the aqueous carboxy group-containing resin as an organic component and the Al-containing oxide as an inorganic component by the ester linkage between the carboxy groups of the aqueous carboxy group-containing resin and hydroxy groups coordinated on the surface of the Al-containing oxide, so that an insulation coating obtained has a much excellent heat resistance. In addition, owing to the a firm network structure (firmly crosslinked structure) formed as above, an insulation coating obtained has remarkably high barrier properties. Furthermore, since an insulation coating contains a specified amount of the Al-containing oxide which is a hard inorganic component, an insulation coating obtained is hardly compressed under compressive stress at high temperatures.

According to the present invention, it is thus possible to obtain the electrical steel sheet with an insulation coating that is excellent in corrosion resistance, blanking workability, insulation quality (interlaminar insulation resistance), heat resistance, and adhesion of an insulation coating to the electrical steel sheet, and that has a much excellent interlaminar insulation resistance even after being kept at high temperatures. The electrical steel sheet with an insulation coating also has an excellent interlaminar insulation resistance after being kept in a wet environment. Furthermore, the electrical steel sheet with an insulation coating does not deteriorate in insulation quality and the like and can maintain desired properties even under compressive stress at high temperatures.

The electrical steel sheet with an insulation coating according to the present invention may be provided with an insulation coating further containing a Ti-containing oxide. As described before, a Ti-containing oxide effectively contributes to the hardening of an insulation coating, that is to say, is significantly effective at further lowering the compressibility of the coating under compressive stress at high temperatures. A Ti-containing oxide is also significantly effective at solving the problem of reduction in interlaminar insulation resistance of an electrical steel sheet due to the scuffing of an insulation coating by manual handling during the manual stacking of electrical steel sheets, for instance.

The insulation coating of the inventive electrical steel sheet with an insulation coating is formed using the coating material which contains the aqueous carboxy group-containing resin (A), the Al-containing oxide (B), and the crosslinking agent or agents (C) selected from among melamine, isocyanate and oxazoline, and may optionally further contain the Ti-containing oxide (D). In other words, the insulation coating of the invention is formed of the coating material which contains the crosslinking agent or agents (C) adapted to crosslink the aqueous carboxy group-containing resin (A). If the closslinking agent or agents remain behind in an insulation coating finally obtained, the coating deteriorates in boiling water resistance (resistance to the exposure to boiling steam), with rusting becoming more liable to occur. Consequently, it is preferable that, in a process for forming an insulation coating on the electrical steel sheet surface using the coating material as above, the amount of the crosslinking agent or agents (C) selected from among melamine, isocyanate and oxazoline and contained in the coating material be adjusted in accordance with the maximum end-point temperature for steel sheet during the baking as described before so that non-reacted crosslinking agent or agents may not remain behind.

EXAMPLES

Effects of the present invention are illustrated in reference to the following Examples, to which the present invention is in no way limited.

Test sheets were manufactured by the method as described below so as to analyze insulation coatings and evaluate electrical steel sheets with insulation coatings with respect to the insulation quality, the heat resistance, and the compressibility at high temperatures.

1. Manufacturing of Test Sheet

(1.1) Sample Sheet

Sample sheets were provided by cutting a non-oriented electrical steel sheet of 0.5 mm in thickness, 50A230 as defined in JIS C 2552 (2000), into pieces each having measured 150 mm wide and 300 mm long.

(1.2) Pretreatment

The electrical steel sheet as a substrate material was immersed in an aqueous sodium orthosilicate solution (with a concentration of 0.8% by mass) at a normal temperature for 30 seconds, then rinsed with water and dried.

(1.3) Preparation of Aqueous Carboxy Group-Containing Resin (A)

The aqueous carboxy group-containing resins (A) as listed in Table 1 along with their ingredients were prepared in accordance with the following procedure. An epoxy resin (a1) was melted at 100°C, and an amine (a2) was added to the melted resin and reacted therewith for five hours, so as to obtain a polymerizable, amine-modified epoxy resin. To the polymerizable, amine-modified epoxy resin thus obtained, a mixture of a carboxy group-containing vinyl monomer (a3), a solvent (isopropyl cellosolve) and a polymerization initiator was added for one hour, and the resultant reaction mixture was kept at 130°C for four hours. Then, the mixture was cooled to 80°C, and received a neutralizer (diethanolamine), a hydrophilic solvent (butyl cellosolve), and water mixed thereinto in this order to thereby yield the relevant aqueous carboxy group-containing resin (A) with a solid content of 30% by mass. The obtained aqueous carboxy group-containing resins (A) had the acid values (mgKOH/g) and pH values as set forth in Table 1. In Table 1, the amounts of an amine (a2) and a carboxy group-containing vinyl monomer (a3) are each expressed as parts by mass, based on 100 parts by mass of an epoxy resin (a1).

[Table 1]

| Resin *1 | Component of aqueous carboxy group-containing resin (A) | | | | | | | | Acid value (mgKOH/g) | pH |
| | Epoxy resin (a1) | | | Amine (a2) | | Carboxy group-containing vinyl monomer (a3) | | | | |
| | Type | Part by mass *2 | Epoxy equivalent | Type | Part by mass *2 | Type | Part by mass *2 | Carboxy group equivalent *3 | | |
|---|---|---|---|---|---|---|---|---|---|---|
| A1 | Bisphenol A-type epoxy resin | 100 | 200 | Dibutylamine | 12 | Acrylic acid<br>Styrene | 10<br>7 | 0.3 | 20 | 85 |
| A2 | Bisphenol A-type epoxy resin | 100 | 400 | Dibutylamine | 12 | Acrylic acid<br>Maleic acid<br>Styrene | 5<br>5<br>1 | 0.8 | 30 | 8 2 |
| A3 | Biphenol A-type epoxy resin | 100 | 500 | Dibutylamine | 12 | Acrylic acid<br>Itaconic acid<br>Styrene<br>Butyl acrylate | 7<br>3<br>5<br>4 | 0.7 | 25 | 83 |
| A4 | Bisphenol A-type epoxy resin | 100 | 600 | Diethanonamine | 14 | Acrylic acid<br>Maleic anhydride | 8<br>2 | 0.9 | 18 | 8.6 |
| A5 | Bisphenol A-type epoxy resin<br>Novolec-type epoxy resin | 80<br>20 | 200<br>500 | Octylamine | 12 | Acrylic acid<br>Styrene | 10<br>7 | 0.3 | 20 | 8.5 |
| A6 | Bisphenol A-type epoxy resin<br>Novoloc-type epoxy resin | 80<br><br>20 | 300<br><br>800 | Cyclohexylamine | 12 | Acrylic acid<br>Itaconic acid<br>Styrene<br>Butyl acrylate | 7<br>3<br>5<br>4 | 0.5 | 28 | 8.2 |
| A7 | Bisphenol A-type epoxy resin | 100 | 600 | Dibutylamine | 12 | Acrylic acid<br>Styrene | 10<br>7 | 0.8 | 20 | 7.9 |

13

| Resin *1 | Component of aqueous carboxy group-containing resin (A) | | | | | | | | Acid value (mgKOH/g) | pH |
|---|---|---|---|---|---|---|---|---|---|---|
| | Epoxy resin (a1) | | | Amine (a2) | | Carboxy group-containing vinyl monomer (a3) | | | | |
| | Type | Part by mass *2 | Epoxy equivalent | Type | Part by mass *2 | Type | Part by mass *2 | Carboxy group equivalent *3 | | |
| A8 | Novoloc-type epoxy resin | 100 | 1500 | Dibutylamine | 12 | Maleic acid Styrene | 10 7 | 2.6 | 30 | 8.0 |

*1) Aqueous carboxy group-containing resin (A).
*2) In terms of solid content.
*3) Carboxy group equivalent for every one equivalent of epoxy groups in aqueous, modified epoxy resin.

(1.4) Preparation of Coating Material for Forming Insulation Coating

The aqueous carboxy group-containing resins (A) as obtained in (1.3) above were each mixed with an Al-containing oxide (B), a crosslinking agent (C), and optionally further with a Ti-containing oxide (D) in accordance with the following procedure so as to prepare coating materials having the chemical compositions (in terms of solid content) as set forth in Table 3.

To part of an aqueous carboxy group-containing resin (A) provided, an Al-containing oxide (B), optionally along with a Ti-containing oxide (D), as well as water, a hydrophilic solvent (butyl cellosolve) in an amount corresponding to 10% by mass of the entire coating material, and a defoaming agent (SN-defoamer 777 manufactured by San Nopco Ltd.) corresponding to 0.3% by mass of the entire coating material were added, and the resultant mixture was placed in a disperser to obtain a uniform dispersion, whereupon a fineness gage was used to make the Al-containing oxide (B), optionally along with the Ti-containing oxide (D), have a particle size of not more than 20 μm. The rest of the aqueous carboxy group-containing resin (A) and a crosslinking agent (C) were then added and dispersed to complete the dispersion. For the improvement in film forming characteristics, a leveling agent (byk 348 manufactured by BYK Japan KK) was added to the obtained dispersion in an amount corresponding to 0.3% by mass of the entire coating material, diethanolamine was used as a neutralizer, and water was added so as to modify the solid content. As a consequence, the coating material had a solid content of 45% by mass, with the pH value having been 8.5.

The Al-containing oxide (B) used was kaolinite or alumina-coated silica as set forth in Table 2. These substances each have a primary particle size of about 1 to 5 μm.

The crosslinking agent (C) as used was a methylated melamine resin MX-035 (with a solid content of 70% by mass) or a mixed etherized melamine resin MX-45 (with a solid content of 100%) as melamine, both manufactured by SANWA Chemical Co., Ltd., DURANATE WB40-80D (with a solid content of 80% by mass) as isocyanate, manufactured by Asahi Kasei Corp., or an oxazoline-containing resin WS-500 (with a solid content of 40% by mass) as oxazoline, manufactured by NIPPON SHOKUBAI CO., LTD.

The Ti-containing oxide (D) as used was titanium oxide (R930; primary particle size, 250 nm) manufactured by ISHIHARA SANGYO KAISHA, LTD.

The types of components (A) through (D) as used and their blending ratios are set forth in Table 3. In Table 3, the amounts of an Al-containing oxide (B), a crosslinking agent (C) and a Ti-containing oxide (D) are each expressed as parts by mass (in terms of solid content), based on 100 parts by mass of an aqueous carboxy group-containing resin (A).

[Table 2]

| Type *4 | Type of alumina | Alumina content (mass%) *5 |
|---|---|---|
| b1 | Kaolinite (Kaoline manufactured by Takehara Chemical Industrial Co., Ltd.) | 36.7 |
| b2 | Alumina-coated silica (NIKKAGEL manufactured by Toshin Chemicals Co.. Ltd.) | 12.8 |

*4) Type of Al-containing oxide (B).
*5) Content of alumina in kaolinite or alumina-coated silica (weight%).

[Table 3]

| Coating material No. | Aqueous carboxy group-containing resin (A) | | Al-containing oxide (B) | | Crosslinking agent (C) | | Ti-containing oxide (D) | Notes |
|---|---|---|---|---|---|---|---|---|
| | Type | Parts by mass *6 | Type | Part by mass *6 | Type | Part by mass *6 | Part by mass *6 | |
| 1 | A1 | 100 | b1 | 200 | Oxazoline | 60 | 20 | Example of invention |
| 2 | A3 | 100 | b1 | 180 | Mixed etherized melamine | 70 | 15 | Example of invention |

(continued)

| Coating material No. | Component of coating material | | | | | | | Notes |
|---|---|---|---|---|---|---|---|---|
| | Aqueous carboxy group-containing resin (A) | | Al-containing oxide (B) | | Crosslinking agent (C) | | Ti-containing oxide (D) | |
| | Type | Parts by mass *6 | Type | Part by mass *6 | Type | Part by mass *6 | Part by mass *6 | |
| 3 | A2 | 100 | b2 | 280 | Methylated melamine | 80 | 10 | Example of invention |
| 4 | A7 | 100 | b1 | 150 | Isocyanate | 60 | 30 | Example of invention |
| 5 | A1 | 100 | b2 | 200 | Methylated melamine | 75 | 25 | Example of invention |
| 6 | A2 | 100 | b1 | 120 | Isocyanate | 60 | 180 | Example of invention |
| 7 | A3 | 100 | b2 | 90 | Oxazoline | 75 | - | Comparative example |
| 8 | A4 | 100 | b1 | 50 | Methylated melamine | 70 | 30 | Comparative example |
| 9 | A5 | 100 | b2 | 20 | Isocyanate | 65 | 100 | Comparative example |
| 10 | A6 | 100 | b1 | 10 | Oxazoline | 80 | 150 | Comparative example |
| 11 | AS | 100 | b2 | 180 | Oxazoline | 80 | - | Example of invention |
| 12 | A8 | 100 | b2 | 110 | Methylated melamine | 70 | - | Example of invention |
| *6) In terme of solid content. | | | | | | | | |

(1.5) Formation of Insulation Coating (Manufacturing of Test Sheet)

The various coating materials as listed in Table 3 were each applied to one of the sample sheets as obtained by the procedures of (1.1) and (1.2) above, onto the surface thereof (both sides) with a roll coater and baked by a hot-blast baking furnace, then left standing so as to cool them to a normal temperature, with insulation coatings having thus been formed, and test sheets manufactured. The types of the coating materials as used, baking temperatures (end-point temperatures for sample sheet), and heating times to reach the baking temperatures are set forth in Table 4.

2. Analysis of Insulation Coating

(2.1) Mass Ratio between Aqueous Carboxy Group-Containing Resin, Al-Containing Oxide, and Ti-Containing Oxide

The various test sheets as obtained in (1.5) above were used to determine and confirm the mass ratios between the aqueous carboxy group-containing resin, the Al-containing oxide and the Ti-containing oxide as having been contained in the dried insulation coating from a calibration curve between the counting by fluorescent X-ray analysis of a specified element constituting the insulation coating and the weight-based method (alkali peeling method). The results are shown in Table 4.

(2.2) Coating Weight of Insulation Coating

The insulation coatings of the test sheets as obtained in (1.5) above were measured in coating weight (per sheet side) using the weight-based method (alkali peeling method).

The measurements are set forth in Table 4.

[Table 4]

| Test sheet No. | Coating material No. | Baking condition | | Component of insulation coating (mass%) | | | Coating weight (g/m$^2$) *10 | Notes |
|---|---|---|---|---|---|---|---|---|
| | | Baking temperature (°C) *7 | Heating time (s) *8 | Carboxy group-containing resin (A) *9 | Al-containing oxide (B) *9 | Ti-containing oxide (D) *9 | | |
| T1 | 1 | 300 | 30 | 31 | 63 | 6 | 8.0 | Example of invention |
| T2 | 2 | 320 | 30 | 34 | 61 | 5 | 8.0 | Example of invention |
| T3 | 5 | 350 | 30 | 31 | 62 | 7 | 10.0 | Example on invention |
| T4 | 7 | 300 | 30 | 52 | 48 | - | 8.0 | Comparative example |
| T5 | 11 | 320 | 30 | 36 | 64 | - | 8.0 | Example of invention |
| T6 | 3 | 320 | 30 | 26 | 72 | 2 | 10.0 | Example of invention |
| T7 | 4 | 320 | 30 | 36 | 54 | 10 | 10.0 | Example of invention |
| T8 | 6 | 320 | 30 | 25 | 30 | 45 | 10.0 | Example of invention |
| T9 | 8 | 320 | 30 | 56 | 28 | 16 | 8.0 | Comparative example |
| T10 | 9 | 320 | 30 | 45 | 9 | 46 | 10.0 | Comparative example |
| T11 | 10 | 320 | 30 | 38 | 4 | 58 | 6.0 | Comparative example |
| T12 | 12 | 250 | 30 | 48 | 52 | - | 8.0 | Example of invention |

*7) End-point temperature for test sheet.
*8) Heating time to reach baking te merature (and-point temperature for test sheet).
*9) In terms of solid content.
*10) Coating weight of insulation coating per one side of test sheet.

3. Evaluation Test

(3.1) Insulation Quality (Interlaminar Insulation Resistance)

The test sheets as listed in Table 4 were measured in interlaminar insulation resistance in accordance with the interlaminar insulation resistance testing (method A) as defined in JIS C 2550 (2000). Criteria for evaluation are as follows.

<Criteria for Evaluation>

G1: The interlaminar insulation resistance is not less than 300 [$\Omega \cdot cm^2$/sheet].
G2: The interlaminar insulation resistance is not less than 100 [$\Omega \cdot cm^2$/sheet] but less than 300 [$\Omega \cdot cm^2$/sheet].
G3: The interlaminar insulation resistance is not less than 50 [$\Omega \cdot cm^3$/sheet] but less than 100 [$\Omega \cdot cm^2$/sheet].
G4: The interlaminar insulation resistance is less than 50 [$\Omega \cdot cm^2$/sheet].

(3.2) Heat Resistance (as Interlaminar Insulation Resistance after Being Kept at High Temperatures)

The test sheets as listed in Table 4 were kept in the atmospheric air at 150°C for three days before they were measured in interlaminar insulation resistance in a similar manner to (3.1) above. Criteria for evaluation are as follows.

<Criteria for Evaluation>

H1: The interlaminar insulation resistance is not less than 200 [$\Omega \cdot cm^2$/sheet].
H2: The interlaminar insulation resistance is not less than 50 [$\Omega \cdot cm^2$/sheet] but less than 200 [$\Omega \cdot cm^2$/sheet].
H3: The interlaminar insulation resistance is not less than 30 [$\Omega \cdot cm^2$/sheet] but less than 50 [$\Omega \cdot cm^2$/sheet].
H4: The interlaminar insulation resistance is less than 30 [$\Omega \cdot cm^2$/sheet].

(3.3) Compressibility at High Temperatures (Compression Test at High Temperatures)

The test sheets as listed in Table 4 were evaluated with respect to the compressibility at high temperatures according to IEC 60404-12.

For each type of the test sheets listed in Table 4, a plurality of (i.e., about 200) test sheets were prepared and sheared into test pieces for compression test of 100 mm x 100 mm in size. Then, the test pieces for compression test as produced from the test sheets of the same type were stacked together to form a laminate with a height (a size in the stacking direction) of 100 mm $\pm$ 0.5 mm. The laminate thus obtained was applied with 1 MPa of compressive stress in the stacking direction at room temperature (23 $\pm$ 2°C), and the height $d_0$ of the laminate was measured with the compressive stress being continuously applied thereto.

After the height $d_0$ of the laminate was measured with the compressive stress being continuously applied thereto, the laminate continuously applied with the compressive stress as above was placed in a heating furnace (furnace atmosphere: atmospheric air) and heated so as to be subjected to heat treatment, namely, held at 200°C for 168 hours. After heat treatment, the laminate was taken out and cooled to room temperature (23 $\pm$ 2°C), whereafter the height $d_1$ of the laminate was measured with the compressive stress being continuously applied thereto.

The compressibility of the laminate having undergone heat treatment (change between the heights of the laminate before and after heat treatment) was determined from the height $d_0$ of the laminate before heat treatment and the height $d_1$ of the same after heat treatment. The compressibility of the laminate was calculated with the following equation.

$$\text{Compressibility (\%)} = (d_0 - d_1) / (d_0 \times 100)$$

Criteria for evaluation are as follows.

<Criteria for Evaluation>

Q1: The compressibility is less than 0.5%.
Q2: The compressibility is not less than 0.5% but less than 1.0%.
Q3: The compressibility is not less than 1.0% but less than 1.5%.
Q4: The compressibility is not less than 1.5%.

The results of the above evaluations are set forth in Table 5. As evident from Table 5, the test sheets as examples of the present invention achieved favorable results for every evaluation item.

[Table 5]

| Test sheet No. | Coating material No. | Evaluation result | | | Notes |
|---|---|---|---|---|---|
| | | Compressibility at high temperatures | Heat resistance | Insulation quality | |
| T1 | 1 | Q2 | H1 | G1 | Example of invention |
| T2 | 2 | Q1 | H1 | G1 | Example of invention |
| T3 | 5 | Q1 | H1 | G1 | Example of invention |
| T4 | 7 | Q4 | H1 | G1 | Comparative example |
| T5 | 11 | Q1 | H1 | G1 | Example of invention |
| T6 | 3 | Q1 | H1 | G1 | Example of invention |
| T7 | 4 | Q1 | H1 | G1 | Example of invention |
| T8 | 6 | Q1 | H1 | G1 | Example of invention |
| T9 | 8 | Q4 | H1 | G1 | Comparative example |
| T10 | 9 | Q4 | H1 | G2 | Comparative example |
| T11 | 10 | Q4 | H1 | G2 | Comparative example |
| T12 | 12 | Q1 | H1 | G1 | Example of invention |

**Claims**

1. A coating material for forming an insulation coating, containing apart from a solvent:

an aqueous carboxy group-containing resin as component (A) in an amount of 100 parts by mass in terms of solid content;
an aluminum-containing oxide as component (B) in an amount of not less than 100 parts by mass but less than 300 parts by mass in terms of solid content, based on the component (A) present in an amount of 100 parts by mass in terms of solid content; and

at least one crosslinking agent as component (C) selected from the group consisting of melamine, isocyanate and oxazoline, in an amount of more than 20 parts by mass but less than 100 parts by mass in terms of solid content, based on the component (A) present in an amount of 100 parts by mass in terms of solid content.

2. The coating material for forming an insulation coating according to claim 1, further containing:

a titanium-containing oxide as component (D) in an amount of more than 10 parts by mass but less than 300 parts by mass in terms of solid content, based on the component (A) present in an amount of 100 parts by mass in terms of solid content.

3. The coating material for forming an insulation coating according to claim 1 or 2, wherein the aqueous carboxy group-containing resin as component (A) has an acid value of 15 to 45 mgKOH/g.

4. A manufacturing method for an electrical steel sheet with an insulation coating, comprising forming an insulation coating on one or both of sides of an electrical steel sheet by applying thereto a coating material containing apart from a solvent:

an aqueous carboxy group-containing resin as component (A) in an amount of 100 parts by mass in terms of solid content;
an aluminum-containing oxide as component (B) in an amount of not less than 100 parts by mass but less than 300 parts by mass in terms of solid content, based on the component (A) present in an amount of 100 parts by mass in terms of solid content; and
at least one crosslinking agent as component (C) selected from the group consisting of melamine, isocyanate and oxazoline, in an amount of more than 20 parts by mass but less than 100 parts by mass in terms of solid content, based on the component (A) present in an amount of 100 parts by mass in terms of solid content.

5. The manufacturing method for an electrical steel sheet with an insulation coating according to claim 4, wherein the coating material further contains:

a titanium-containing oxide as component (D) in an amount of more than 10 parts by mass but less than 300 parts by mass in terms of solid content, based on the component (A) present in an amount of 100 parts by mass in terms of solid content.

6. The manufacturing method for an electrical steel sheet with an insulation coating according to claim 4 or 5, wherein the aqueous carboxy group-containing resin as component (A) has an acid value of 15 to 45 mgKOH/g.

7. The manufacturing method for an electrical steel sheet with an insulation coating according to any one of claims 4 to 6, wherein the insulation coating has a coating weight per sheet side of not less than 0.9 $g/m^2$ but not more than 20 $g/m^2$.

8. An electrical steel sheet with an insulation coating, having an insulation coating formed by the manufacturing method according to any one of claims 4 to 7.

## INTERNATIONAL SEARCH REPORT

| International application No. |
| --- |
| PCT/JP2014/071586 |

| A. CLASSIFICATION OF SUBJECT MATTER |
| --- |
| *C23C22/00*(2006.01)i, *H01F1/18*(2006.01)i |

According to International Patent Classification (IPC) or to both national classification and IPC

| B. FIELDS SEARCHED |
| --- |

Minimum documentation searched (classification system followed by classification symbols)
C23C22/00, H01F1/18

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | JP 2008-518087 A (E.I. Du Pont de Nemours & Co.),<br>29 May 2008 (29.05.2008),<br>claims 1, 7, 11, 14 to 16; paragraphs [0001], [0002], [0010] to [0046]<br>& EP 1805260 A      & WO 2006/049935 A1<br>& DE 602005017174 D  & CA 2578530 A<br>& KR 10-2007-0085443 A  & CN 101048461 A | 1–8 |
| Y | JP 11-193476 A (NKK Corp.),<br>21 July 1999 (21.07.1999),<br>paragraphs [0001], [0012], [0022] to [0050]<br>(Family: none) | 1–8 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>31 October, 2014 (31.10.14) | Date of mailing of the international search report<br>11 November, 2014 (11.11.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

**EP 3 040 444 A1**

**INTERNATIONAL SEARCH REPORT**

International application No.

PCT/JP2014/071586

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-235530 A  (JFE Steel Corp.),<br>15 October 2009 (15.10.2009),<br>claims 1 to 3; paragraphs [0001], [0002] [0012]<br>to [0025]<br>(Family: none) | 1-8 |
| P,X | JP 2013-209739 A  (JFE Steel Corp.),<br>10 October 2013 (10.10.2013),<br>entire text<br>& WO 2013/129282 A1      & TW 201335430 A | 1-8 |

Form PCT/ISA/210 (continuation of second sheet) (July 2009)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60070610 A

- JP 2009235530 A